# EUROPÄISCHE PATENTSCHRIFT

(11) **EP 1 163 830 B1**
(45) Veröffentlichungstag und Bekanntmachung des Hinweises auf die Patenterteilung: **18.05.2005**
(21) Anmeldenummer: 01113469.9
(22) Anmeldetag: 02.06.2001
(51) Int. Cl.: A01B 73/00

(54) **Gezogenes landwirtschaftliches Gerät**
Drawn agricultural implement
Appareil agricole tracté

(30) Priorität: 15.06.2000 DE 10029363
(43) Veröffentlichungstag der Anmeldung: 19.12.2001
(73) Patentinhaber: DEERE & COMPANY, Moline, Illinois 61265-8098 (US)
(72) Erfinder: Beaufort, David, 70100 Gray (FR); Faivre, Damien, 70100 Apremont (FR); Mentzer, Matthew, Ottumwa, IA 52501 (US); Tepe, Heinrich, 70100 Gray la Ville (FR)
(74) Vertreter: Magin, Ludwig Bernhard

(56) Entgegenhaltungen:
- EP-A- 0 628 237
- EP-A- 0 784 916
- EP-A- 0 818 134
- WO-A-98/54945
- US-A- 3 919 831
- US-A- 4 558 560
- US-A- 4 607 996

## Beschreibung

Die Erfindung betrifft ein gezogenes landwirtschaftliches Gerät, insbesondere Mähfahrzeug, mit einem innerhalb eines Arbeitsbereichs vertikal verstellbaren Rahmen, Rädern und einer Deichsel zur Verbindung mit einem Zugfahrzeug und ein Gespann.

Die US-A-4,558,560 zeigt ein Mähfahrzeug und einen Anhänger für dessen Transport. Der Anhänger ist mit vertikal schwenkbaren Rampen versehen, auf denen das Mähfahrzeug auf den Anhänger aufgefahren werden kann. Nachdem sich das Mähfahrzeug auf dem Anhänger befindet, wird es abgesenkt, so dass es sich auf den Anhänger aufsetzt, und eine Deichsel zwischen dem Mähfahrzeug und einem Zugfahrzeug wird geschwenkt, so dass das Mähgerät auf dem Anhänger hinter dem Zugfahrzeug gezogen werden kann.

Aus der US-A-5,136,828 geht ein Mähgerät hervor, das Transporträder enthält, die anstatt der normalen Räder auf den Boden absenkbar sind und verwendet werden können, um das Mähgerät mit der Deichsel längs hinter einem Zugfahrzeug herzuziehen. Dieses Mähgerät wird nicht auf einem Anhänger sondern auf den Transporträdern gezogen, so dass die Transporträder und deren Aufhängung entsprechend stabil ausgebildet sein müssen. Das Gewicht und die Kosten einer derart integrierten Transporthilfe sind beträchtlich.

Die WO A1 98/54946 offenbart ein Mähgerät, dessen Rahmen mit der Mähvorrichtung lediglich zwischen einer Transportstellung und einer Arbeitsstellung verstellbar ist; damit dieses Mähgerät auf einen Transportanhänger aufgesetzt werden kann, muss auf seiner einen Seite der Durchmesser des bestehenden Transportrades verringert und zum Erhalt der Tragfähigkeit ein zweites Transportrad hinzugefügt werden. Diese Lösung bedingt zum einem erhöhte Kosten und zum anderen, dass das Mähgerät nur von einer Seite her auf den Transportanhänger aufgesetzt werden kann.

Die EP A2 818 134 offenbart ein Mähgerät mit einem Zusatzrahmen, der über Transporträder verfügt und in eine abgesenkte Stellung gebracht werden kann, in der der Rahmen um ein weiteres Maß angehoben wird. Diese Räder sind quer zu den Haupträdern ausgerichtet und können nur betrieben werden, wenn sich das Mähgerät in der Transportstellung längs hinter einem Ackerschlepper oder dergleichen befindet. Der Rahmen wird mittels dieser Räder nur einenends angehoben, während der andere Endbereich über die Deichsel und die Hubvorrichtung an dem Ackerschlepper angehoben wird.

Die US A 3 919 831 zeigt und beschreibt ein Mähgerät mit einem Unterrahmen, der mittels Stellmotoren den Rahmen in eine angehobene Stellung bringen kann, die der Transportstellung des Mähgeräts entspricht; diese Stellmotoren entsprechen den ansonsten üblichen, die zwischen dem Rahmen und einer Schwinge angeordnet sind, an der die Räder drehbar befestigt sind.

Das der Erfindung zugrunde liegende Problem wird darin gesehen, dass das rückwärts gerichtete Auffahren auf den Anhänger fahrerisches Geschick erfordert und voraussetzt, daß der Anhänger beim Auffahren fest steht.
Dieses Problem wird durch die Merkmale des Patentanspruchs in erfinderischer Weise gelöst und durch Merkmale der davon abhängigen Patentansprüche in vorteilhafter Weise weiterentwickelt.

Auf diese Weise kann das Gerät um einen weiteren Bereich angehoben werden, in dem der Rahmen einen größeren Abstand zu dem Boden aufweist und der so groß ist, daß das Gerät auf den Anhänger aufgesetzt werden kann, ohne Rampen benutzen zu müssen. Beispielsweise wird der Rahmen angehoben und der Anhänger unter den angehobenen Rahmen geschoben; oder das Gerät wird über den Anhänger gefahren. Nach einer entsprechenden Plazierung des Geräts oberhalb des Anhängers wird das Gerät abgesenkt und erforderlichenfalls auf dem Anhänger gesichert.

Eine Möglichkeit, den Rahmen um ein zusätzliches Maß anzuheben besteht darin, wenigstens ein Zusatzrad vorzusehen, das gegenüber dem Rahmen über den Arbeitsbereich hinaus vertikal verstellbar, insbesondere schwenkbar ist. Die Verstellung kann auch entlang von Schienen oder dergleichen erfolgen. Während ein einziges Rad grundsätzlich ausreichen würde, ist es vorteilhaft, an jedem Ende des Rahmens und im Bereich der Räder ein Zusatzrad vorzusehen.

Eine technisch einfache und kostengünstige Lösung, einen zusätzlichen Transporthubbereich zu erreichen, besteht darin, für das Zusatzrad einen vertikal schwenkbaren Lenker vorzusehen, der z. B. an dem ebenfalls vertikal schwenkbaren Lenker des Rades angebracht und mit diesem somit verstellbar ist. Der Lenker des Zusatzrades kann auch nur mit dem Lenker zu einer gemeinsamen Bewegung verbunden werden.

Eine andere Ausführungsform verzichtet auf ein Zusatzrad und sieht einen mehrteiligen Lenker des Rades vor, wobei ein Teil für die Schwenkbewegung in dem Arbeitsbereich und ein weiterer Teil für den Transporthubbereich vorgesehen ist. Ein derart großer Stellweg kann z. B. mittels eines Teleskopzylinders erreicht werden.

Eine weitere Ausführungsform schlägt einen Rahmen vor, der teilweise teleskopisch ausgebildet ist. Z. B. enthält der Endbereich ein Rohr, das in dem Rahmen vertikal und geradlinig verschiebbar ist und an dem jeweils ein Rad vertikal schwenkbar angreift. In einer eingefahrenen Stellung des Rahmens vollzieht sich eine Verstellung des Rades innerhalb des Arbeitsbereichs; wird der Teleskopmechanismus ausgefahren, geschieht die Verstellung innerhalb des Transporthubbereichs. Diese Ausführung hat den Vorteil, daß sich die Außenabmessungen des Geräts infolge eines Zusatzrades oder dergleichen nicht ändern. Alternativ kann der Teleskopmechanismus sowohl den Arbeitsbereich als auch den Transporthubbereich abdecken und das Rad lediglich drehbar tragen.

Es liegt zwar in dem Schutzbereich dieser Erfindung, die Verstellung in den und innerhalb des Transporthubbereichs mittels einer mechanischen Vorrichtung vorzunehmen, z. B. durch eine Einleitung der Zugkräfte in die Stellvorrichtung; aus Zeitgründen und aus Gründen der einfacheren Handhabung wird jedoch eine fremdkraftbetätigbare Stellvorrichtung vorgesehen, die z. B. von einem Zugfahrzeug aus bedient werden kann.

Das Vorhandensein einer horizontal schwenkbaren Deichsel macht es möglich, das Gerät seitlich des Zugfahrzeugs anzuordnen und es mit diesem Versatz bis zu einer Lage oberhalb des Anhängers zu fahren, abzusenken und dann längs hinter dem Zugfahrzeug auszurichten.

Mit einem Sensor und einer Steuer- oder Regelvorrichtung, die die Stellung des Geräts erkennen und verwerten, kann vermieden werden, daß eine Bewegung in den Zusatzhubbereich bereits erfolgt, wenn sich das Gerät noch in dem Arbeitsbereich befindet.

Eine Anordnung des Lenkers des Zusatzrads an dem Lenker des Rads seitlich und außen des Lenkers des Rads führt dazu, daß die Spur zweier Zusatzräder größer ist als die der Räder. Auf diese Weise kann das Gerät über einen Transporter gefahren werden, dessen Länge maximal dem lichten Abstand der Zusatzräder entspricht, so daß die Räder auf den Transporter aufgesetzt werden können.

Wenn die beiden Lenker sich in vertikaler Richtung decken, sich also übergreifen, wird seitlicher Bauraum gespart und es können Biege- und/oder Torsionskräfte bei der Kraftübertragung zwischen beiden Lenkern vermieden werden.

Es kann auf eine gesonderte Stellvorrichtung für den Lenker des Zusatzrades verzichtet werden, wenn die Bewegung des Lenkers des Rades für die Verstellung des Zusatzrades ausgenutzt wird. Hierzu ist ein als Riegel bezeichnetes Element vorgesehen, das stellvertretend für eine Verbindung zwischen beiden Lenkern steht. Dieser Riegel kann mechanischer, hydraulischer oder sonstiger Art sein. Die Möglichkeit, beide Lenker in unterschiedlichen vertikalen Stellungen miteinander zu verbinden, sorgt für eine Betriebs- und eine Außerbetriebsstellung des Zusatzrades gegenüber dem Gerät, so daß der Betrieb des Geräts nicht beeinträchtigt wird.

Eine einfache Weise, beide Lenker miteinander zu verbinden, besteht darin, daß der Lenker des Rades an einem freien Ende ein Bogensegment aufweist, in das der Riegel einführbar ist. Das Bogenelement kann an den Lenker angeschraubt oder mit diesem einstückig ausgebildet sein. Die Bogenform ist nicht zwingend aber hilfreich, wenn sich der Riegel auf einer Kreisbahn um das Gelenk des Lenkers des Rades bewegt, da er dann stets in der optimalen Stellung ist, um mit dem Lenker in Formschluß zu geraten.

Die Stellung des Geräts auf dem Anhänger kann gefestigt werden, indem mittels einer Verriegelungsvorrichtung ein im wesentlichen starrer Verbund erzeugt wird.

Wenn der Abstand der Zusatzräder gleich oder größer der Breite eines das Gerät aufnehmenden Anhängers ist, kann das Gerät soweit über den Anhänger gefahren werden, daß es mit seinen Rädern sicher auf eine Plattform des Anhängers abgesetzt werden kann.

In der Zeichnung sind zwei nachfolgend näher beschriebene Ausführungsbeispiele der Erfindung dargestellt. Es zeigt:

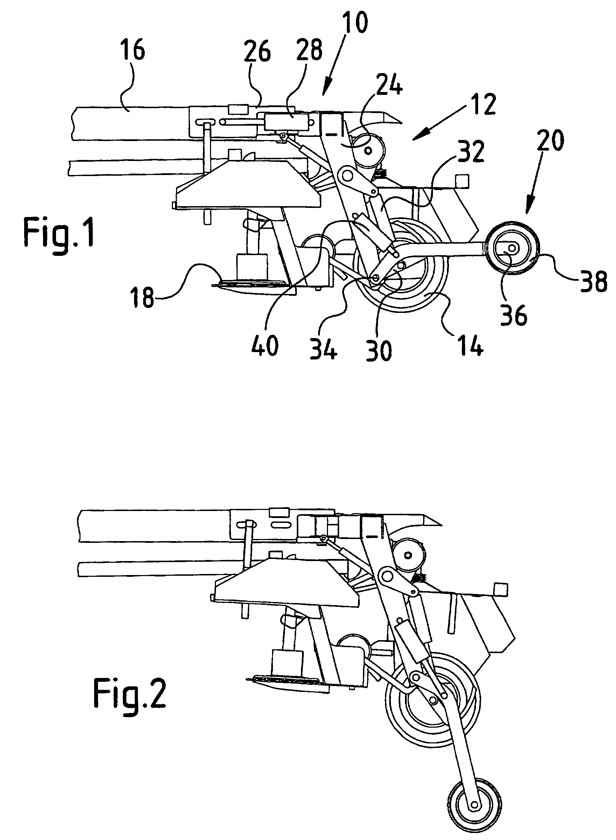

- Figur 1: ein gezogenes landwirtschaftliches Gerät mit einer Hubvorrichtung zum Erreichen eines Transporthubbereichs in Seitenansicht, wobei sich die Hubvorrichtung in einer Außerbetriebsstellung befindet,
- Figur 2: das Gerät aus Figur 1, wobei sich die Hubvorrichtung in einer Betriebsstellung befindet,
- Figur 3: einen Anhänger, auf den das Gerät aufgelegt werden kann,
- Figur 4: das gezogene landwirtschaftliche Gerät mit einer alternativen Hubvorrichtung in einer Außerbetriebsstellung
- Figur 5: einen Lenker mit einem Riegel für ein Zusatzrad der Hubvorrichtung in perspektivischer Darstellung,
- Figur 6: das Gerät mit der Hubvorrichtung in einer verriegelten Bereitschaftsstellung und
- Figur 7: das Gerät mit der Hubvorrichtung in einer ausgehobenen Stellung und oberhalb des Anhängers.

Die Zeichnung zeigt ein gezogenes landwirtschaftliches Gerät 10 mit einem Rahmen 12, Rädern 14, einer Deichsel 16, Werkzeugen 18 und einer Hubvorrichtung 20 und einen Anhänger 22.

Das dargestellte Gerät 10 ist als ein Mähgerät ausgebildet, das von einem nicht gezeigten Zugfahrzeug, z. B. einem Ackerschlepper, während des Betriebs über ein Feld gezogen und zwischen den betrieblichen Einsätzen auf der Straße transportiert werden kann. Die Erfindung findet Anwendung insbesondere bei Geräten 10, deren Breite mehr als drei Meter beträgt und die längs auf der Straße transportiert werden müssen. Hierzu wird das Gerät in nachstehend näher beschriebener Weise auf dem Anhänger 22 platziert. Das Gerät 10 kann ebenso als Bodenbearbeitungsgerät, als Sägerät, als Erntebergungsgerät oder dergleichen ausgebildet werden.

Der Rahmen 12 ist in der Fahrtrichtung gesehen in der Form eines "U" ausgebildet und weist an den seitlichen Enden einen aufrechten Schenkel 24 auf. Der Rahmen 12 ist aus Rohrprofilen zusammengesetzt und trägt innerhalb des Freiraums des "U" die Werkzeuge 18, z. B. einen Mähbalken; folglich erstreckt sich der Rahmen 12 über die gesamte Breite des Geräts 10.

Jeweils ein Rad 14 ist am unteren Endbereich eines Schenkels 24 vorgesehen und wird mittels eines Lenkers 30 an dem Schenkel 24 getragen und mittels einer Stellvorrichtung 32 gegenüber dem Rahmen 12 verstellt, wie dies jeweils bekannt ist. Der Lenker 30 ist einenends in einem Gelenk 34 an dem Schenkel 24 vertikal schwenkbar gehalten und trägt anderenends das Rad 14. Die Stellvorrichtung 32 ist als ein einfachwirkender Hydraulikmotor ausgebildet, der einenends an dem Schenkel 24 und anderenends an dem Lenker 30 jeweils schwenkbar angreift. Infolge einer Beaufschlagung der Stellvorrichtung 32 mit Hydraulikflüssigkeit oder deren Entweichenlassen schwenkt der Lenker 30 vertikal und verändert dadurch die Stellung des Rades 14 gegenüber dem Rahmen 12, der daraufhin die Entfernung zu dem Boden, auf dem die Räder 14 stehen, ändert.

Die Deichsel 16 stellt die Verbindung zwischen dem Rahmen 12 und dem Zugfahrzeug dar und greift über ein Gelenk 26 horizontal schwenkbar an dem Rahmen 12 an. Das Gelenk 26 kann sich zwar im seitlichen Bereich des Rahmens 12 befinden, findet seine bevorzugte Lage jedoch in dessen Mitte. Die Länge der Deichsel 16 ist so bemessen, daß sie erheblich über die Seitenkante des Rahmens 12 hinausragt, wenn sie in eine Stellung quer zur normalen Arbeitsrichtung des Geräts 10 ausgerichtet ist. Auf diese Weise, kann das Gerät 10 hinter dem Zugfahrzeug in einer Längsausrichtung mittels der Deichsel 16 gezogen werden. Zwischen der Deichsel 16 und dem Rahmen 12 ist eine hydraulisch betätigbare Stellvorrichtung 28 vorgesehen, die von dem Fahrersitz des Zugfahrzeugs aus bedienbar ist. Mittels einer solchen an sich bekannten Stellvorrichtung 28 kann das Gerät 10 in unterschiedliche Stellungen mit Bezug auf das Zugfahrzeug gebracht werden. Hinsichtlich einer möglichen Ausführungsform einer Stellvorrichtung wird auf die EP-A1-0 792 574 verwiesen.

Die Werkzeuge 18 sind in diesem Ausführungsbeispiel als ein Mähbalken mit mehreren rotierenden Mähtellern ausgebildet. Die Stellung der Werkzeuge 18 wird während des Betriebs des Geräts 10 an die verschiedenen Erntebedingungen angepaßt. Innerhalb eines Arbeitsbereichs kann das Werkzeug 18 stufenlos zwischen einer Lage direkt auf dem Boden und einer Lage verstellt werden, in der das Werkzeug 18 einen Abstand von z. B. 0,4 Meter zum Boden einnimmt.

Die Hubvorrichtung 20 enthält in diesem Ausführungsbeispiel einen Lenker 36, ein Zusatzrad 38 und eine Stellvorrichtung 40.

Die Hubvorrichtung 20 hat die Aufgabe, für die Verladung des Geräts 10 auf den Anhänger 22 den Abstand des Rahmens 12 zu dem Boden zu erhöhen, nachdem das Rad 14 am unteren Ende des Schwenkbereichs des Lenkers 30 angelangt ist.

Der Lenker 36 ist in vergleichbarer Weise wie der Lenker 30 ausgebildet und ist einenends, nämlich vorne, an dem Schenkel 24 angelenkt, trägt an dem rückwärtigen Ende drehbar das Zusatzrad 38 und ist dazwischen mit der Stellvorrichtung 40 verbunden. Der Lenker 36, bzw. die Lenker 36, da an jeder Seite des Rahmens 12 ein Lenker 36 vorgesehen ist, ist an der Außenseite des Schenkels 24 in dem Gelenk 34 angelenkt. Je nach der Lage und Größe des Rades 14 ist der Lenker 36 seitlich verschränkt, um genügend Freiraum für eine vertikale Schwenkbewegung zu erlangen. Eine solche Verschränkung kann jedoch unterbleiben, wenn das Rad 14 schmal ausgebildet oder seitlich nach innen versetzt angeordnet ist. Wenn dies auch nicht unbedingt erforderlich ist, so ist in diesem Ausführungsbeispiel doch vorgesehen, daß sich der Lenker 36 wesentlich über den Lenker 30 nach hinten hinaus erstreckt. Je weiter der Lenker 36 über den Lenker 30 hinausragt, desto größer ist der mit ihm erzielbare Transporthubbereich.

Das Zusatzrad 38 ist kleiner ausgebildet als das Rad 14, da es nur für die Zwecke der Verladung des Geräts 10 auf den Anhänger 22 erforderlich ist und nicht den Beanspruchungen während des rauhen Betriebs auf dem Feld unterliegt. Das Zusatzrad, bzw. die Zusatzräder 38, ist/sind möglichst nahe an dem auskragenden Ende des Lenkers 36 vorgesehen. Im Gegensatz zu dem Rad 14 braucht das Zusatzrad 38 nicht gummibereift ausgebildet zu werden, sondern kann als Stahlrad hergestellt werden. In einem Fall, in dem das Gerät 10 nicht über den Anhänger 22 gefahren, sondern nur über diesen gehoben werden soll, reicht es auch aus, den Lenker 36 mit einem Fuß anstatt mit einem Zusatzrad 38 zu versehen, mit dem das Gerät 10 auf dem Boden abgestützt werden kann.

Die Stellvorrichtung 40 ist als ein Hydraulikmotor ausgebildet, der jeweils schwenkbar einenends an dem Schenkel 24 des Rades 14 und anderenends an dem Lenker 36 des Zusatzrads 38 angreift. Die Stellvorrichtung 40 funktioniert in diesem Ausführungsbeispiel doppeltwirkend, was gewährleistet, daß das Zusatzrad 38 soweit nach oben geschwenkt werden kann, daß es in einem Außerbetriebszustand nicht auf dem Boden abrollt. Sollte es auf dieses Kriterium nicht ankommen, reicht auch eine einfachwirkende Stellvorrichtung 40 aus. Alternativ könnte eine einfachwirkende Stellvorrichtung 40 verwendet werden, die z. B. mittels Hydraulikflüssigkeit in eine Richtung und mittels einer Feder oder dergleichen in die andere Richtung verstellt wird. Diese Stellvorrichtung 40, wie auch die Stellvorrichtung 28 für das Rad 14 werden über ein nicht gezeigtes Hydrauliksystem mit einer Pumpe, Leitung, Ventilen und weiteren bekannten Systemkomponenten mit Druckmittel beaufschlagt. Ein Einfahren der Stellvorrichtung 40 bewirkt, daß der Lenker 36 und das Zusatzrad 38 nach oben geschwenkt werden, bis das Zusatzrad 38 von dem Boden abgehoben ist. Ein Ausfahren der Stellvorrichtung 40 hat zur Folge, daß der Lenker 36 und das Zusatzrad 38 nach unten bzw. mit Blick auf die Zeichnung im Uhrzeigerdrehsinn geschwenkt werden, und zwar solange, bis das Rad 14 vom Boden abhebt und der Rahmen 12 den erforderlichen Abstand zum Boden einnimmt.

Die Hubvorrichtung 20 ist an jeder Seite des Rahmens 12, d. h an jedem Schenkel 24 vorgesehen.

Der Anhänger 22 enthält eine Plattform 42, eine Achse 44 und Räder 46.

Die Plattform 42 weist eine Länge auf, die es einerseits ermöglicht, das Gerät 10 auf ihr abzusetzen, andererseits aber auch zwischen den Zusatzrädern 38 aufgenommen werden kann. Die Plattform 42 ist mit verschiedenen Vertiefungen, Mulden, etc. dargestellt, die es ermöglichen, das Gerät 10 so auf ihr aufzusetzen, daß es während des Transports seine Lage nicht ändert. Erforderlichenfalls können auch Verriegelungsvorrichtungen vorgesehen werden, wie dies bereits bekannt ist.

Bei dem dargestellten Anhänger 22 ist lediglich eine einzige Achse 44 mit zwei Rädern 46 vorgesehen, die sich in der Mitte der Plattform 42 befindet. Damit die Plattform 42 zum Beladen des Geräts 10 eine im wesentlichen horizontale Lage einnimmt, können nicht dargestellte Stützen oder dergleichen vorgesehen werden. Alternativ können anstatt einer Achse 44 zwei Achsen 44 als Tandemachse vorgesehen werden. Wenn die Hubvorrichtung 20 für eine ausreichende Hubhöhe sorgen kann, kann das Gerät 10 auch auf die Plattform 42 aufgesetzt werden, wenn diese sich in einer Schräglage befindet, wobei die Plattform 42 beim Aufsetzen des Geräts 10 in eine waagrechte Lage gedrängt wird.

Die Räder 46 sind drehbar an der Achse 44 aufgenommen und möglichst klein gehalten, damit der Hubbereich der Hubvorrichtung 20 nicht zu groß ausgelegt werden muß.

Nach alledem ergibt sich folgende Funktion der Erfindung.

Es wird davon ausgegangen, daß der Anhänger 22 so abgestellt ist, daß das Gerät 10 an ihn quer zu seiner Längserstreckung herangefahren werden kann. Des weiteren befindet sich das Gerät 10 hinter einem Zugfahrzeug in einer angehobenen Lage, in der die Stellvorrichtung 32 des Rades 14 vollkommen ausgefahren ist und sich der Rahmen 12 am oberen Ende seines Arbeitsbereichs befindet.

Zum Verladen des Geräts 10 auf dem Anhänger 22 wird es nunmehr quer zur Längsrichtung der Plattform 42 auf diesen zugefahren und die Stellvorrichtung 40 derart betätigt, daß sie ausfährt. Infolge des Ausfahrens der Stellvorrichtung 40 stützen sich die Zusatzräder 38 auf dem Boden ab und heben bei einer weiteren Bewegung der Stellvorrichtung 40 den Rahmen 12 weiter an. Die Stellvorrichtung 40 wird solange betätigt, bis der Rahmen 12 bzw. die Werkzeuge 18 einen Abstand zum Boden eingenommen haben, der der maximalen Höhe des Anhängers 22 entspricht. Anschließend wird das Gerät 10 weiter auf den Anhänger 22 zugefahren, und zwar derart, daß der Anhänger 22 bzw. dessen Plattform 42 zwischen den Zusatzrädern 38 aufgenommen wird und sich die Räder 14 und/oder die Werkzeuge 18 oberhalb der Plattform 42 befindet. Daraufhin werden die Stellvorrichtungen 40 entlastet, so daß sich der Rahmen 12 absenkt, bis er auf der Plattform 42 aufsitzt. Die Stellvorrichtungen 40 werden weiter eingefahren, bis sie von dem Boden abgehoben sind. In dem Falle, daß Verriegelungsvorrichtungen zwischen dem Gerät 10 und dem Anhänger 22 vorgesehen sind, werden, bzw. sind diese nunmehr eingerastet. Schließlich wird die Stellvorrichtung 28 der Deichsel 16 betätigt, so daß das Gerät 10 mit dem Anhänger 22 horizontal um das Gelenk 26 geschwenkt werden und schließlich längs hinter dem Zugfahrzeug zu stehen kommen.

Im nachfolgenden wird ein zweites Ausführungsbeispiel der Erfindung beschrieben.

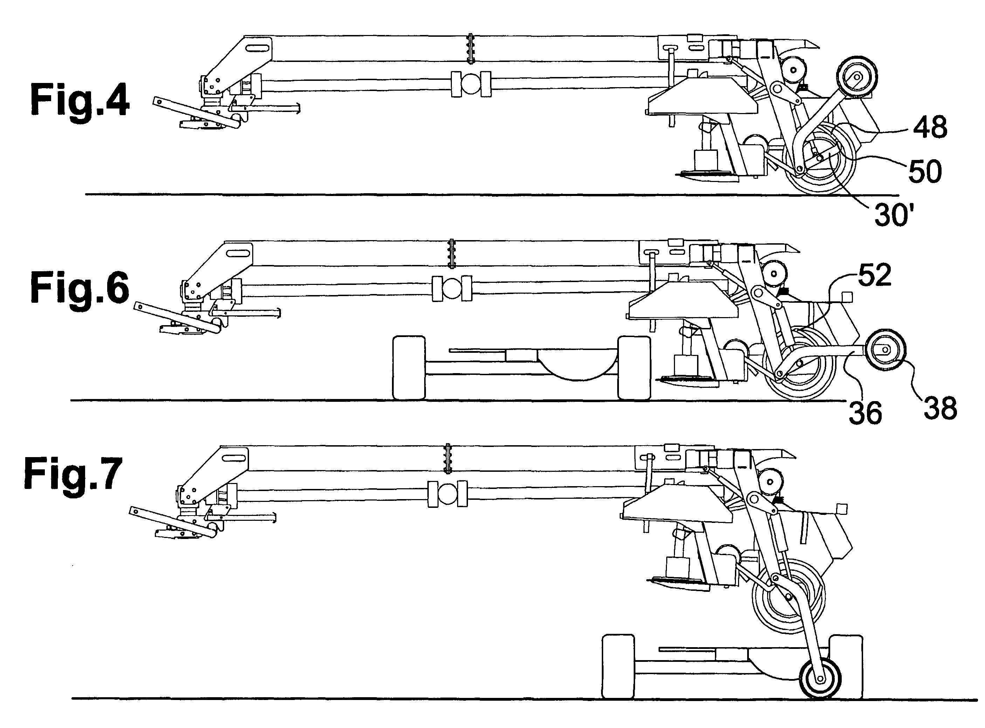

Das Gerät nach den Figuren 4, 6 und 7 weist denselben Aufbau auf wie das zuvor beschriebene Gerät 10. Der Unterschied liegt in der Hubvorrichtung 20.

Die Hubvorrichtung 20 nach diesem Ausführungsbeispiel weist einen Lenker 30' für das Rad 14 auf, der an dem freien, d. h. dem Schenkel 24 abgelegenen Ende ein Bogensegment 48 aufweiset, das sich ausgehend von dem Lenker 30' über nahezu 90 Grad entgegen dem Uhrzeigerdrehsinn mit konstantem Radius zu dem Gelenk 34 erstreckt und mit dem Lenker 30' fest verbunden ist. Die Verbindung des Bogensegments 48 mit dem Lenker 30' kann sowohl einteilig als Schmiedeteil als auch lösbar aufgrund einer Schraubverbindung erfolgen. Das Bogensegment 48 ist mit einer unteren Bohrung 50 und einer oberen Bohrung 52 versehen, die sich in radialer Richtung erstrecken.

Die in dem ersten Ausführungsbeispiel verwendete Stellvorrichtung 40 entfällt.

Gemäß Figur 5 ist der das Zusatzrad 38 tragende Lenker 36 mit einem Riegel 54 versehen.

Der Lenker 36 ist doppelwandig mit einem dazwischenliegenden Freiraum ausgebildet, in dem das Bogensegment 48 aufgenommen werden kann, d. h. jeweils eine Wand des Lenkers 36 ist an die Innen- bzw. die Außenseite des Schenkels 24 in dem Gelenk 34 vertikal schwenkbar angeschlossen.

Der Riegel 54 kann in der einfachsten Form als eine mechanisch, z. B. mittels Seilzug betätigte Sperre ausgebildet sein. In dem dargestellten Ausführungsbeispiel ist der Riegel 54 als ein fremdkraftbetätigbarer Hydraulikzylinder ausgebildet, der auf nicht gezeigte Weise an ein Hydrauliksystem des Zugfahrzeugs oder des Geräts 10 angeschlossen ist. Der Riegel 54 befindet sich in dem Innenraum des Lenkers 36 und weist ein Gehäuse 56 und einen darin beweglichen Kolben 58 auf. Der Riegel 54 erstreckt sich in der Richtung des Lenkers 54 derart, daß sich der Kolben 58 radial auf das Bogensegment 48 bewegt und somit in die untere oder obere Bohrung 50, 52 eintreten kann. Demnach kann der doppeltwirkende Riegel 54 in einer Endstellung vor dem Bogensegment 48 Halt machen und in einer anderen Stellung das Bogensegment 48 durchdringen.

Die Aufgabe des Riegels 54 besteht darin, die beiden Lenker 30 und 36 miteinander in verschiedenen Stellungen formschlüssig zu verbinden und somit eine gemeinsame Bewegung zu erreichen.

Es wird nun auf die Darstellungen in den Figuren 5 bis 7 eingegangen.

In dem Zustand nach Figur 5 ist der Kolben 58 in der oberen Bohrung 52 aufgenommen, und da sich der Lenker 30 in einer oberen Stellung befindet, befindet sich auch der Lenker 36 in einer oberen Stellung, in der das Zusatzrad 38 den Boden nicht berührt. In diesem Zustand kann das Gerät 10 auf dem Feld eingesetzt werden.

Bei der Darstellung nach Figur 6 ist der Kolben 58 in die untere Bohrung 50 eingesetzt, so daß der Lenker 36 bei der Stellung des Lenkers 30 gemäß Figur 5 eine tieferliegende Stellung einnimmt, in der sich das Zusatzrad 38 noch über dem Boden befindet.

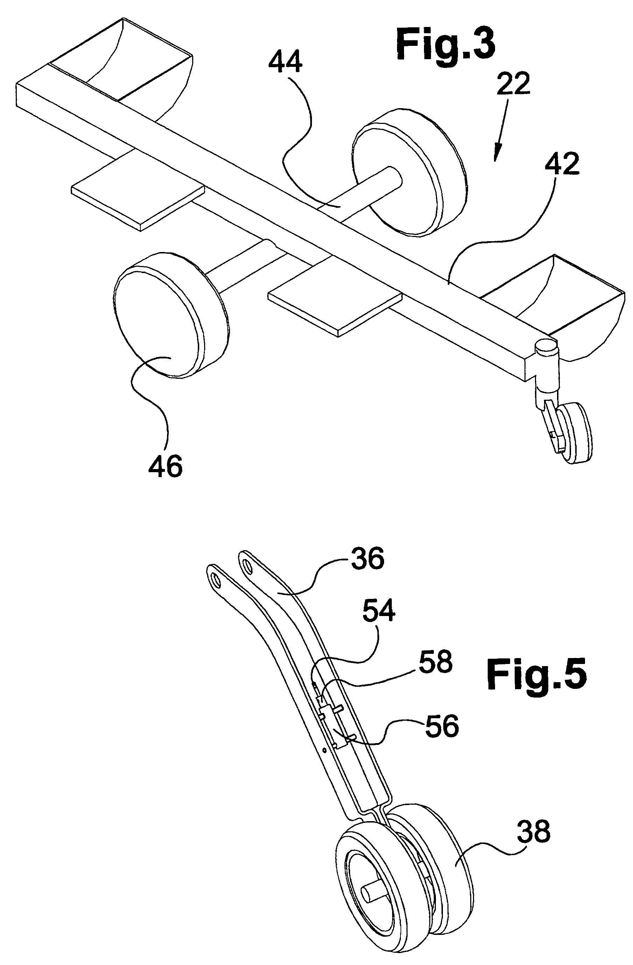

Figur 7 zeigt nunmehr eine Situation, in der sich der Kolben 58 in der unteren Bohrung 50 befindet, die Stellvorrichtung 32 den Lenker 30 aber nach unten geschwenkt hat. Da wie bereits bei dem ersten Ausführungsbeispiel der Lenker 36 wesentlich länger ist als der Lenker 30 beschreibt das Zusatzrad 38 einen größeren Bogen und kommt nach einem kurzen Weg des Lenkers 30 auf dem Boden auf. Wenn die Stellvorrichtung 32 den Lenker 30 weiter ausfährt hebt der Lenker 36 mit dem Zusatzrad 38 das Gerät 10 an, und zwar bis der maximale Stellweg der Stellvorrichtung 32 erreicht ist. In dieser voll angehobenen Stellung des Geräts 10 entsteht zwischen den Rädern 14 und dem Boden ein Freiraum, der ausreicht, das Gerät 10 über dem Anhänger 22 zu positionieren, wie dies in Figur 7 dargestellt ist. Da gemäß Figur 3 die Räder 46 des Anhängers 22 in dessen Mittenbereich angeordnet sind, reicht es aus, wenn das Gerät 10 in eine Höhe gebracht wird, in der dessen Räder 46 die Höhe der Plattform 42 erreichen.

Zum Transport wird das Gerät 10 wie in Figur 6 gezeigt mit seitlichem Versatz zu dem Zugfahrzeug an den Anhänger 22 herangefahren, die Stellvorrichtung 32 betätigt, weitergefahren, bis sich die Räder 14 und das Werkzeug 18 über der Plattform 42 befinden, das Gerät 10 abgesenkt, bis sich die Zusatzräder 38 vom Boden abheben und die Deichsel 16 um das Gelenk 26 geschwenkt, bis sie sich in der Längsrichtung des Anhängers 22 und mithin des Geräts erstreckt. In dieser Stellung kann das Gerät 10 auf der Straße transportiert werden. Gegebenenfalls kann das Gerät 10 auf dem Anhänger 22 lagegesichert werden, falls dies erforderlich sein sollte.

## Patentansprüche

1. Gezogenes landwirtschaftliches Gerät (10), insbesondere Mähfahrzeug, mit einem innerhalb eines Arbeitsbereichs vertikal verstellbaren Rahmen (12), Rädern (14) für den Arbeitsbetrieb und einer Deichsel (16) zur Verbindung mit einem Zugfahrzeug, **gekennzeichnet durch** eine Hubvorrichtung (20) zur Anhebung des Rahmens (12) um einen Transporthubbereich zusätzlich zu dem Arbeitsbereich, wobei die Hubvorrichtung (20):
a) wenigstens ein Zusatzrad (38), dessen Drehachse achsparallel zu der der Räder (14) verläuft, aufweist, oder
b) wenigstens ein Zusatzrad (38), dessen Drehachse achsparallel zu der der Räder (14) verläuft, und eine zusätzliche Stellvorrichtung (40) zur Verstellung des Zusatzrades (38) aufweist, oder
c) eine zusätzliche Stellvorrichtung zur Verstellung der Räder (14) aufweist.

2. Gezogenes landwirtschaftliches Gerät nach Anspruch 1, **dadurch gekennzeichnet, daß** das Zusatzrad (38) an dem Rahmen (12) vertikal verstellbar, insbesondere schwenkbar angebracht ist.

3. Gezogenes landwirtschaftliches Gerät nach Anspruch 1 oder 2, **dadurch gekennzeichnet, daß** die Räder (14) mittels Lenkern (30) an den Rahmen (12) angeschlossen sind und das Zusatzrad (38) mittels eines Lenkers (36) an den Lenker (30) des Rades (14) in verschiedenen vertikalen Stellungen anschließbar ist.

4. Gezogenes landwirtschaftliches Gerät nach Anspruch 1, **dadurch gekennzeichnet, daß** die Räder (14) mittels mehrteiliger Lenker an dem Rahmen (12) vertikal schwenkbar angebracht sind, wobei ein erster für den Arbeitsbereich bestimmter Teil einenends an dem Rahmen (12) und anderenends an dem zweiten Teil und der zweite für den Transporthubbereich vorgesehene Teil einenends mit dem ersten Teil und anderenends mit dem Rad 14 verbunden ist.

5. Gezogenes landwirtschaftliches Gerät nach Anspruch 1, **dadurch gekennzeichnet, daß** die Hubvorrichtung (20) einen Teleskopmechanismus des Rahmens (12) enthält, wobei an einem ausfahrbaren Teil des Teleskopmechanismus jeweils ein vorzugsweise vertikal schwenkbares Rad (14) angebracht ist.

6. Gezogenes landwirtschaftliches Gerät nach einem oder mehreren der vorherigen Ansprüche, **dadurch gekennzeichnet, daß** die Verstellung innerhalb des Transporthubbereichs mittels einer fremdkraftbetätigbaren Stellvorrichtung (40) erfolgt.

7. Gezogenes landwirtschaftliches Gerät nach Anspruch 1, **dadurch gekennzeichnet, daß** die Deichsel (16) horizontal schwenkbar an dem Rahmen (12) angebracht ist.

8. Gezogenes landwirtschaftliches Gerät nach Anspruch 1, **gekennzeichnet durch** wenigstens einen Sensor und eine Steuer- oder Regelvorrichtung, wobei der Sensor ein Signal erzeugt, das angibt, ob sich das Gerät (10) am Ende seines Arbeitsbereichs befindet, und die Steuer- oder Regelvorrichtung eine Bewegung in den Transportbereich in Abhängigkeit von dem Signal des Sensors erlaubt.

9. Gezogenes landwirtschaftliches Gerät nach einem oder mehreren der vorherigen Ansprüche, **dadurch gekennzeichnet, daß** der Lenker (36) des Zusatzrades (38) seitlich und außen an dem Lenker (30) des Rades (14) angebracht ist.

10. Gezogenes landwirtschaftliches Gerät nach einem oder mehreren der vorherigen Ansprüche, **dadurch gekennzeichnet, daß** der Lenker (36) des Zusatzrades (38) den Lenker (30) des Rades (14) übergreift.

11. Gezogenes landwirtschaftliches Gerät nach einem oder mehreren der vorherigen Ansprüche, **dadurch gekennzeichnet, daß** zwischen dem Lenker (36) des Zusatzrades (38) und dem Lenker (30) des Rades (14) ein Riegel (54) vorgesehen ist, der beide Lenker (30, 36) in unterschiedlichen vertikalen Stellungen miteinander verriegelt.

12. Gezogenes landwirtschaftliches Gerät nach Anspruch 11, **dadurch gekennzeichnet, daß** der Lenker (30) des Rades (14) an einem freien Ende ein Bogensegment (48) aufweist, in das der Riegel (54) einführbar ist.

13. Gezogenes landwirtschaftliches Gerät nach einem oder mehreren der vorherigen Ansprüche, **dadurch gekennzeichnet, daß** das Gerät (10) mit einer Verriegelungsvorrichtung zur Verbindung mit dem Anhänger (22) versehen ist.

14. Gespann bestehend aus einem gezogenen landwirtschaftlichen Gerät (10) nach einem oder mehreren der vorherigen Ansprüche und einem Anhänger (22), wobei der Anhänger (22) eine Länge aufweist, die maximal dem lichten Abstand zweier Zusatzräder (38) entspricht.

## Claims

1. A towed agricultural implement (10), especially a mowing vehicle, with a frame (12) vertically adjustable within a working range, wheels (14) for use in operation and drawbar (16) for connection to a towing vehicle, **characterized by** a lift device (20) for raising the frame (12) through a transport range additional to the working range, wherein the lift device (20) comprises:
a. at least one supplementary wheel (38) whose axis of rotation is axially parallel to that of the wheels (14), or
b. at least one supplementary wheel (38) whose axis of rotation is axially parallel to that of the wheels (14) and a supplementary positioning device (40) for adjusting the supplementary wheel (38), or
c. a supplementary positioning device for adjusting the wheels (14).

2. A towed agricultural implement according to claim 1, **characterized in that** the supplementary wheel (38) is vertically adjustable, in particular pivotally, on the frame (12).

3. A towed agricultural implement according to claim 1 or 2, **characterized in that** the wheels (14) are attached to the frame (12) by means of links (30) and the supplementary wheel (38) can be attached by means of a link (36) to the links (30) of the wheel (14) at different vertical positions.

4. A towed agricultural implement according to claim 1, **characterized in that** the wheels (14) are fitted to pivot vertically on the frame (12) by means of multi-part links, wherein a first part provided for the working range is connected at one end to the frame (12) and at the other end to the second part and the second part provided for the transport lift range is connected at one end to the first part and at the other end to the wheel (14).

5. A towed agricultural implement according to claim 1, **characterized in that** the lift device (20) includes a telescopic mechanism of the frame (12), wherein a preferably vertically pivotable wheel (14) is fitted in each case on an extensible part of the telescopic mechanism.

6. A towed agricultural implement according to one or more of the preceding claims, **characterized in that** the adjustment within the transport lift range is effected by means of a remotely actuated positioning device (40).

7. A towed agricultural implement according to claim 1, **characterized in that** the drawbar (16) is fitted horizontally pivotally on the frame (12).

8. A towed agricultural implement according to claim 1, **characterized by** at least one sensor and a control or regulating device, wherein the sensor generates a signal which indicates whether the implement (10) is at the limit of its working range and the control or regulating device allows a movement into the transport range in dependence on the signal of the sensor.

9. A towed agricultural implement according to one or more of the preceding claims, **characterized in that** the link (36) of the supplementary wheel (38) is fitted to the side and outwardly to the link (30) of the wheel (14).

10. A towed agricultural implement according to one or more of the preceding claims, **characterized in that** the link (36) of the supplementary wheel (38) overlaps the link (30) of the wheel (14).

11. A towed agricultural implement according to one or more of the preceding claims, **characterized in that** a lock (54) is provided between the link (36) of the supplementary wheel (38) and the link (30) of the wheel (14) and locks the two links (30, 36) together in different vertical positions.

12. A towed agricultural implement according to claim 11, **characterized in that** the link (30) of the wheel (14) has a curved segment (48) at a free end, into which the lock (54) can be introduced.

13. A towed agricultural implement according to one or more of the preceding claims, **characterized in that** the implement (10) is provided with a latch device for connecting to the trailer (22).

14. A team consisting of a towed agricultural implement (10) according to one or more of the preceding claims and a trailer (22), wherein the trailer (22) has a length which corresponds at maximum to the clear space between two supplementary wheels (38).

## Revendications

1. Machine agricole (10) tractée, en particulier véhicule de fauchage, comportant un châssis (12), verticalement réglable à l'intérieur d'une zone de travail, des roues (14) pour l'utilisation en cours de travail et une barre d'attelage (16) pour l'attelage à un tracteur, **caractérisée par** un dispositif de levage (20) destiné à lever le châssis (12) dans une zone de levage pour le transport en plus de la zone de travail, le dispositif de levage (20) comporte :
a) au moins une roue supplémentaire (38), dont l'axe de rotation est parallèle à l'axe de rotation des roues (14), ou
b) au moins une roue supplémentaire (38), dont l'axe de rotation est parallèle à l'axe de rotation des roues (14), et un dispositif de réglage (40) supplémentaire destiné à régler la roue supplémentaire (38), ou
c) un dispositif de réglage supplémentaire destiné à régler les roues (14).

2. Machine agricole tractée selon la revendication 1, **caractérisée en ce que** la roue supplémentaire (38) est montée contre le châssis (12) de manière réglable verticalement, en particulier de manière pivotante.

3. Machine agricole tractée selon la revendication 1 ou 2, **caractérisée en ce que** les roues (14) sont assemblées contre le châssis (12) au moyen des bras oscillants (30) et la roue supplémentaire (38) peut être assemblée dans différentes positions verticales au moyen d'un bras oscillant (36) contre le bras oscillant (30) de la roue (14).

4. Machine agricole tractée selon la revendication 1, **caractérisée en ce que** les roues (14) sont montées pivotantes dans le sens vertical contre le châssis (12) au moyen des bras oscillants en plusieurs parties, une première partie, déterminée pour la zone de travail, étant assemblée avec une extrémité contre le châssis (12) et avec l'autre extrémité contre la deuxième partie, et la deuxième partie prévue pour la zone de levage en transport étant assemblée avec une extrémité contre la première partie et avec l'autre extrémité contre la roue (14).

5. Machine agricole tractée selon la revendication 1, **caractérisée en ce que** le dispositif de levage (20) comporte un mécanisme télescopique du châssis (12), une roue (14) étant montée de préférence pivotante verticalement contre une partie extractible du mécanisme télescopique.

6. Machine agricole tractée selon une ou plusieurs des revendications précédentes, **caractérisée en ce que** le réglage à l'intérieur de la zone de levage en transport est effectué au moyen d'un dispositif de réglage (40) apte à être actionné par une force externe.

7. Machine agricole tractée selon la revendication 1, **caractérisée en ce que** la barre d'attelage (16) est montée pivotante horizontalement contre le châssis (12).

8. Machine agricole tractée selon la revendication 1, **caractérisée par** au moins un capteur et un dispositif de commande ou réglage, le capteur générant un signal qui indique si la machine (10) se situe à la fin de sa zone de travail, et le dispositif de commande ou réglage permettant un mouvement dans la zone de transport en fonction du signal émis par le capteur.

9. Machine agricole tractée selon une ou plusieurs des revendications précédentes, **caractérisée en ce que** le bras oscillant (36) de la roue supplémentaire (38) est monté latéralement et à l'extérieur contre le bras oscillant (30) de la roue (14).

10. Machine agricole tractée selon une ou plusieurs des revendications précédentes, **caractérisée en ce que** le bras oscillant (36) de la roue supplémentaire (38) s'engage au-dessus du bras oscillant (30) de la roue (14).

11. Machine agricole tractée selon une ou plusieurs des revendications précédentes, **caractérisée en ce qu'**entre le bras oscillant (36) de la roue supplémentaire (38) et le bras oscillant (30) de la roue (14) est prévu un boulon de verrouillage (54), qui verrouille les deux bras oscillants (30, 36) l'un avec l'autre dans différentes positions verticales.

12. Machine agricole tractée selon la revendication 11, **caractérisée en ce que** le bras oscillant (30) de la roue (14) comporte au niveau d'une extrémité libre un segment courbe (48) dans lequel peut être introduit le boulon de verrouillage (54).

13. Machine agricole tractée selon une ou plusieurs des revendications précédentes, **caractérisée en ce que** la machine (10) est munie d'un dispositif de verrouillage pour l'attelage avec la remorque (22).

14. Attelage formé par une machine agricole tractée (10) selon une ou plusieurs des revendications précédentes et une remorque (22), la remorque (22) ayant une longueur qui correspond au maximum à la distance libre entre deux roues supplémentaires (38).
